(19) Europäisches Patentamt
European Patent Office
Office européen des brevets

(11) **EP 4 220 379 A1**

(12) **EUROPEAN PATENT APPLICATION**
published in accordance with Art. 153(4) EPC

(43) Date of publication:
**02.08.2023 Bulletin 2023/31**

(51) International Patent Classification (IPC):
**G06F 7/485** (2006.01)

(21) Application number: **20959318.5**

(52) Cooperative Patent Classification (CPC):
**G06F 7/485**

(22) Date of filing: **31.10.2020**

(86) International application number:
**PCT/CN2020/125676**

(87) International publication number:
**WO 2022/088157 (05.05.2022 Gazette 2022/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **JIANG, Donglong
Shenzhen, Guangdong 518129 (CN)**
• **DONG, Zhenjiang
Shenzhen, Guangdong 518129 (CN)**
• **XIE, Huan
Shenzhen, Guangdong 518129 (CN)**
• **LEE, Chun Hang
Shenzhen, Guangdong 518129 (CN)**

(74) Representative: **Grünecker Patent- und
Rechtsanwälte
PartG mbB
Leopoldstraße 4
80802 München (DE)**

(54) **FLOATING-POINT NUMBER COMPUTING CIRCUIT AND FLOATING-POINT NUMBER COMPUTING METHOD**

(57)     A floating point number calculation circuit (100) and a floating point number calculation method are disclosed. A splitting circuit (102) included in the floating point number calculation circuit (100) splits a mantissa part of a first floating point number and a mantissa part of a second floating point number. An exponential processing circuit (104) obtains a second number of shifted bits of each mantissa part obtained after splitting. A calculation circuit (105) calculates a product of the mantissa part of the first floating point number and the mantissa part of the second floating point number based on each mantissa part obtained after splitting and the second number of shifted bits of each mantissa part obtained after splitting. The floating point number calculation circuit (100) can split a large bit-width floating point number into small bit-width floating point numbers, so that a small bit-width multiplier is used to calculate the large bit-width floating point number. The floating point number calculation circuit (100) provided in this application has small timing overheads and low hardware design costs. Therefore, calculation performance of the multiplier is appropriately used.

FIG. 3

**Description**

**TECHNICAL FIELD**

Embodiments of this application relate to the computer field, further to an application of an artificial intelligence (artificial intelligence, AI) technology in the computer field, and in particular, to a floating point number calculation circuit and a floating point number calculation method.

**BACKGROUND**

Artificial intelligence (Artificial Intelligence, AI) is a theory, a method, a technology, or an application system that simulates, extends, and expands human intelligence by using a digital computer or a machine controlled by a digital computer, to perceive an environment, obtain knowledge, and achieve an optimal result based on the knowledge. In other words, artificial intelligence is a branch of computer science and attempts to understand essence of intelligence and produce a new intelligent machine that can react in a similar manner to human intelligence. Artificial intelligence is to research design principles and implementation methods of various intelligent machines, so that the machines have perception, inference, and decision-making functions. Research in the field of artificial intelligence includes robotics, natural language processing, computer vision, decision-making and inference, man-machine interaction, recommendation and search, AI basic theories, and the like.

Currently, a convolutional neural network (convolutional neural network, CNN) is widely used in a plurality of types of image processing applications. In such applications, when floating point (floating point, FP)16 data is used to perform network training on a model, network training is not converged or a convergence speed is low due to low precision of the FP16 data. Therefore, higher-precision FP32 data is required to ensure network training effect. In addition, in a supercomputing application, higher-precision FP64 data is required for numerical calculation.

In an existing data calculation solution, a large bit-width multiplier is usually used to calculate data. For example, a multiplier for calculating FP64 data is usually reused to calculate the FP64 data and FP32 data. In an existing calculation solution, a 54-bit (binarb digit, bit) multiplier is designed to directly support calculation of a mantissa (mantissa) of the FP64 data. When the multiplier is used to calculate the FP32 data, the 54-bit multiplier is logically divided into two 27-bit parts to support calculation of mantissa parts of two pairs of FP32 data. As for processing of an exponential (exponential, exp) part, an eap processing unit of the FP64 part is directly copied to process the extra eap part of the FP32. However, in terms of an area ratio, area overheads of an FP64 multiplier are approximately equal to those of four FP32 multipliers. When the FP64 multiplier is reused to calculate the FP32 data, the FP64 multiplier implements only two times higher than calculation performance of the FP32 multiplier and the FP64 multiplier also has large timing overheads and high hardware design costs. Therefore, when the large bit-width multiplier is used to calculate the data, timing overheads, a hardware design and the like are unsatisfactory.

**SUMMARY**

Embodiments of this application provide a floating point number calculation circuit and a floating point number calculation method. The floating point number calculation circuit can split a large bit-width floating point number into small bit-width floating point numbers, so that a small bit-width multiplier is used to calculate the large bit-width floating point number The floating point number calculation circuit has small timing overheads, and low hardware design costs. Therefore, calculation performance of the multiplier is appropriately used.

A first aspect of embodiments of this application provides a floating point number calculation circuit. The floating point number calculation circuit includes a memory controller, a splitting circuit, a storage circuit, an exponential processing circuit, and a calculation circuit. An input terminal of the splitting circuit is electrically connected to an output terminal of the memory controller, and an output terminal of the splitting circuit is electrically connected to an input terminal of the storage circuit. An input terminal of the exponential processing circuit is electrically connected to a first output terminal of the storage circuit, and an output terminal of the exponential processing circuit is electrically connected to a first input terminal of the calculation circuit. A second input terminal of the calculation circuit is electrically connected to a second output terminal of the storage circuit. The memory controller is configured to obtain a first floating point number and a second floating point number. The splitting circuit is configured to split a mantissa part of the first floating point number and a mantissa part of the second floating point number, and obtain a first number of shifted bits of each mantissa part obtained after splitting. The storage circuit is configured to store each mantissa part obtained after splitting, an exponential part corresponding to each mantissa part obtained after splitting, and the first number of shifted bits of each mantissa part obtained after splitting. The exponential processing circuit is configured to: add an exponential part of the first floating point number and an exponential part of the second floating point number to obtain a first operation result, add the first number of shifted bits of each mantissa part obtained after splitting and the exponential part corresponding to each mantissa part obtained after splitting to obtain a plurality of second operation results, and obtain, based on the plurality of second operation results, a second number of shifted bits of each mantissa part obtained after splitting. The calculation circuit is configured to calculate a product of the mantissa part of the first floating point number and the mantissa part of the second floating point number based on each mantissa part obtained after splitting and the second number of shifted bits of each mantissa part obtained after splitting.

An embodiment of this application provides a floating point number calculation circuit. A splitting circuit included in the floating point number calculation circuit splits a mantissa part of a first floating point number and a mantissa part of a second floating point number An exponential processing circuit obtains a second number of shifted bits of each mantissa part obtained after splitting. A calculation circuit calculates a product of the mantissa part of the first floating point number and the mantissa part of the second floating point number based on each mantissa part obtained after splitting and the second number of shifted bits of each mantissa part obtained after splitting. The floating point number calculation circuit can split a large bit-width floating point number into small bit-width floating point numbers, so that a small bit-width multiplier is used to calculate the large bit-width floating point number The floating point number calculation circuit provided in this application has small timing overheads and low hardware design costs. Therefore, calculation performance of the multiplier is appropriately used.

In a possible implementation of the first aspect, the splitting circuit is configured to split the mantissa part of the first floating point number into a first high-order mantissa and a first low-order mantissa, and split the mantissa part of the second floating point number into a second high-order mantissa and a second low-order mantissa. The first number of shifted bits indicates a shift difference between a most significant bit of each high-order mantissa and a most significant bit of each low-order mantissa.

In this possible implementation, according to the floating point number calculation circuit provided in this application, the large bit-width mantissa part of the first floating point number can be split into the first high-order mantissa and the first low-order mantissa with a small bit width, and the large bit-width mantissa part of the second floating point number can be split into the second high-order mantissa and the second low-order mantissa with a small bit width, so that a small bit-width multiplier is used to calculate the product of the mantissa parts obtained after splitting. This reduces hardware design costs, and calculation performance of the multiplier is appropriately used.

In a possible implementation of the first aspect, the first high-order mantissa includes a first mantissa, the first low-order mantissa includes a second mantissa, the second high-order mantissa includes a third mantissa, and the second low-order mantissa includes a fourth mantissa.

In this possible implementation, a specific splitting manner for a mantissa part of a floating point number is provided. After a mantissa part of an FP32 floating point number is split in this splitting manner, an FP 16 multiplier can be used for calculation. Similarly, after a mantissa part of an FP64 floating point number is split in this splitting manner, an FP32 multiplier can be used for calculation. After a mantissa part of an FP128 floating point number is split in this splitting manner, an FP64 multiplier can be used for calculation. In this splitting manner, a small bit-width multiplier can be used to calculate a product of large bit-width mantissa parts.

In a possible implementation of the first aspect, the first high-order mantissa includes a first mantissa. The first low-order mantissa includes a second mantissa, a third mantissa, a fourth mantissa, and a fifth mantissa. The second high-order mantissa includes a sixth mantissa. The second low-order mantissa includes a seventh mantissa, an eighth mantissa, a ninth mantissa, and a tenth mantissa.

In this possible implementation, a specific splitting manner for a mantissa part of a floating point number is provided. After a mantissa part of an FP64 floating point number is split in this splitting manner, an FP 16 multiplier can be used for calculation. Similarly, after a mantissa part of an FP128 floating point number is split in this splitting manner, an FP32 multiplier can be used for calculation. In this splitting manner, a small bit-width multiplier can be used to calculate a product of large bit-width mantissa parts.

In a possible implementation of the first aspect, the exponential processing circuit includes a first adder, a selection circuit, and a second adder. An input terminal of the first adder is electrically connected to the first output terminal of the storage circuit, and an output terminal of the first adder is electrically connected to a first input terminal of the second adder. A second input terminal of the second adder is electrically connected to an output terminal of the selection circuit, and an output terminal of the second adder is electrically connected to the first input terminal of the calculation circuit. The first adder is configured to add the first number of shifted bits of each mantissa part obtained after splitting and the exponential part corresponding to each mantissa part obtained after splitting, to obtain the plurality of second operation results. The selection circuit is configured to select a largest value in the plurality of second operation results. The second adder is configured to subtract each second operation result from the largest value in the plurality of second operation results, to obtain the second number of shifted bits of each mantissa part obtained after splitting.

This possible implementation provides a specific implementation form of hardware, thereby improving implementability of this solution.

In a possible implementation of the first aspect, the calculation circuit includes a multiplier, a shift register, and a third adder. An input terminal of the multiplier is electrically connected to the second output terminal of the storage circuit, and an output terminal of the multiplier is electrically connected to a first input terminal of the shift register. A second input terminal of the shift register is electrically connected to the output terminal of the second adder. An output terminal of the shift register is electrically connected to an input terminal of the third adder. The multiplier is configured to respectively multiply all mantissa parts that are obtained after splitting and that include the first high-order mantissa and the first low-order mantissa by all mantissa parts that are obtained after splitting and that include the second high-order mantissa and the second low-order mantissa, to obtain a plurality of pieces of multiplication data. The shift register is configured to perform shift processing on the plurality of pieces of multiplication data based on the second number of shifted bits of each mantissa part obtained after splitting. The third adder is configured to perform an addition operation on a plurality of pieces of multiplication data obtained after shift processing, to obtain the product of the mantissa part of the first floating point number and the mantissa part of the second floating point number

[0017]    This possible implementation provides a specific implementation form of hardware, thereby improving implementability of this solution.

A second aspect of embodiments of this application provides a floating point number calculation method. The method includes: obtaining a first floating point number and a second floating point number; splitting a mantissa part of the first floating point number and a mantissa part of the second floating point number, and obtaining a first number of shifted bits of each mantissa part obtained after splitting; storing each mantissa part obtained after splitting, an exponential part corresponding to each mantissa part obtained after splitting, and the first number of shifted bits of each mantissa part obtained after splitting; adding an exponential part of the first floating point number and an exponential part of the second floating point number to obtain a first operation result, adding the first number of shifted bits of each mantissa part obtained after splitting and the exponential part corresponding to each mantissa part obtained after splitting to obtain a plurality of second operation results, and obtaining, based on the plurality of second operation results, a second number of shifted bits of each mantissa part obtained after splitting; and calculating a product of the mantissa part of the first floating point number and the mantissa part of the second floating point number based on each mantissa part obtained after splitting and the second number of shifted bits of each mantissa part obtained after splitting.

In this embodiment of this application, the mantissa part of the first floating point number and the mantissa part of the second floating point number are split to obtain the second number of shifted bits of each mantissa part obtained after splitting. Then, the product of the mantissa part of the first floating point number and the mantissa part of the second floating point number is calculated based on each mantissa part obtained after splitting and the second number of shifted bits of each mantissa part obtained after splitting. In the method, a large bit-width floating point number can be split into a small bit-width floating point number, so that a small bit-width multiplier is used to calculate the large bit-width floating point number According to the floating point number calculation method provided in this application, a calculation apparatus has short timing overheads and low hardware design costs, and calculation performance of a multiplier included in the calculation apparatus is appropriately used.

In a possible implementation of the second aspect, the splitting a mantissa part of the first floating point number and a mantissa part of the second floating point number includes: splitting the mantissa part of the first floating point number into a first high-order mantissa and a first low-order mantissa, and splitting the mantissa part of the second floating point number into a second high-order mantissa and a second low-order mantissa. The first number of shifted bits indicates a shift difference between a most significant bit of each high-order mantissa and a most significant bit of each low-order mantissa.

In this possible implementation, according to the floating point number calculation method provided in this application, the large bit-width mantissa part of the first floating point number can be split into the first high-order mantissa and the first low-order mantissa with a small bit width, the large bit-width mantissa part of the second floating point number can be split into the second high-order mantissa and the second low-order mantissa with a small bit width, so that a small bit-width multiplier is used to calculate the product of the mantissa parts obtained after splitting. This reduces hardware design costs, and calculation performance of the multiplier is appropriately used.

In a possible implementation of the second aspect, the first high-order mantissa includes a first mantissa, the first low-order mantissa includes a second mantissa, the second high-order mantissa includes a third mantissa, and the second low-order mantissa includes a fourth mantissa.

In this possible implementation, a specific splitting manner for a mantissa part of a floating point number is provided. After a mantissa part of an FP32 floating point number is split in this splitting manner, an FP16 multiplier can be used for calculation. Similarly, after a mantissa part of an FP64 floating point number is split in this splitting manner, an FP32 multiplier can be used for calculation. After a mantissa part of an FP128 floating point number is split in this splitting manner, an FP64 multiplier can be used for calculation. In this splitting manner, a small bit-width multiplier can be used to calculate a product of large bit-width mantissa parts.

In a possible implementation of the second aspect, the first high-order mantissa includes a first mantissa. The first low-order mantissa includes a second mantissa, a third mantissa, a fourth mantissa, and a fifth mantissa. The second high-order mantissa includes a sixth mantissa. The second low-order mantissa includes a seventh mantissa, an eighth mantissa, a ninth mantissa, and a tenth mantissa.

In this possible implementation, a specific splitting manner for a mantissa part of a floating point number is provided. After a mantissa part of an FP64 floating point number is split in this splitting manner, an FP16 multiplier can be used for calculation. Similarly, after a mantissa part of an FP128 floating point number is split in this splitting manner, an FP32 multiplier can be used for calculation. In this splitting manner, a small bit-width multiplier can be used to calculate a product of large bit-width mantissa parts.

A third aspect of embodiments of this application provides a calculation apparatus. The calculation apparatus includes a control circuit and a floating point number calculation circuit. The floating point number calculation circuit calculates data under control of the control circuit. The floating point number calculation circuit is the floating point number calculation circuit described in any one of the first aspect or the possible implementations of the first aspect.

## BRIEF DESCRIPTION OF DRAWINGS

FIG. 1 is a diagram of a processing principle of a convolutional neural network according to an embodiment of this application;

FIG. 2 is a schematic diagram of composition of an FP32 floating point number according to an embodiment of this application;

FIG. 3 is a schematic diagram of a structure of a floating point number calculation circuit according to an embodiment of this application;

FIG. 4 is a schematic diagram of an embodiment of a floating point number calculation circuit according to an embodiment of this application;

FIG. 5 is a schematic diagram of another structure of a floating point number calculation circuit according to an embodiment of this application;

FIG. 6 is a schematic diagram of another embodiment of a floating point number calculation circuit according to an embodiment of this application;

FIG. 7 is a schematic diagram of another embodiment of a floating point number calculation circuit according to an embodiment of this application;

FIG. 8 is a schematic diagram of another embodiment of a floating point number calculation circuit according to an embodiment of this application;

FIG. 9 is a schematic diagram of another embodiment of a floating point number calculation circuit according to an embodiment of this application;

FIG. 10 is a schematic diagram of another embodiment of a floating point number calculation circuit according to an embodiment of this application;

FIG. 11 is a schematic diagram of another embodiment of a floating point number calculation circuit according to an embodiment of this application;

FIG. 12 is a schematic diagram of another embodiment of a floating point number calculation circuit according to an embodiment of this application; and

FIG. 13 is a schematic diagram of another embodiment of a floating point number calculation circuit according to an embodiment of this application.

## DESCRIPTION OF EMBODIMENTS

To make objectives, technical solutions, and advantages of this application clearer, the following describes embodiments of this application with reference to accompanying drawings. It is clear that the described embodiments are merely some rather than all of the embodiments of this application. A person of ordinary skill in the art may learn that, as a new application scenario emerges, the technical solutions provided in embodiments of this application are also applicable to a similar technical problem.

In this specification, claims, and accompanying drawings of this application, the terms "first", "second", and the like are intended to distinguish between similar objects but do not necessarily indicate a specific order or sequence. It should be understood that data termed in such a way is interchangeable in proper circumstances, so that embodiments described herein can be implemented in other orders than the order illustrated or described herein. In addition, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effect can be achieved.

Artificial intelligence (Artificial Intelligence, AI) is a theory, a method, a technology, or an application system that simulates, extends, and expands human intelligence by using a digital computer or a machine controlled by a digital computer, to perceive an environment, obtain knowledge, and achieve an optimal result based on the knowledge. In other words, artificial intelligence is a branch of computer science and attempts to understand essence of intelligence and produce a new intelligent machine that can react in a similar manner to human intelligence. Artificial intelligence is to research design principles and implementation methods of various intelligent machines, so that the machines have perception, inference, and decision-making functions. Research in the field of artificial intelligence includes robotics, natural language processing, computer vision, decision-making and inference, man-machine interaction, recommendation and search, AI basic theories, and the like.

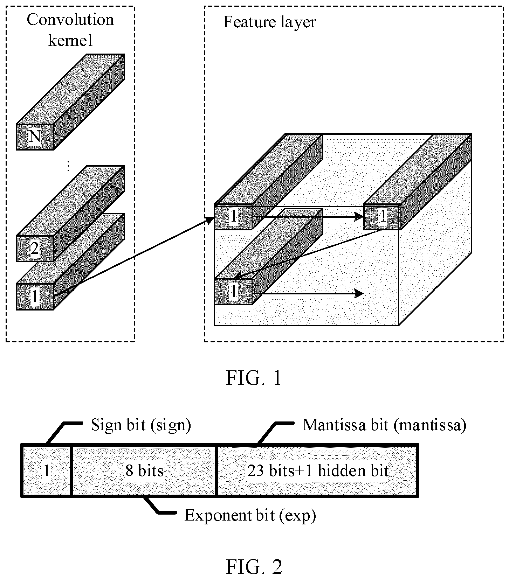

FIG. 1 is a diagram of a processing principle of a convolutional neural network according to this application.

The convolutional neural network CNN has a wide application prospect in the fields such as image, speech recognition, and the like. As shown in FIG. 1, the convolutional neural network needs to perform a convolution operation on a plurality of convolution kernels and one or more feature maps. Specifically, each convolution kernel moves pixel by pixel in the row direction from a first pixel of the feature map. When reaching an end point of this row, the convolution kernel moves down by one pixel in the column direction, returns to a start point in the row direction, and repeats the movement process in the row direction, until all pixels of the feature map are traversed. In the movement process of the convolution kernel, a parameter in the convolution kernel and data at a corresponding location in the feature map are used as two parts of inputs of a convolution operation, to perform a convolution operation (multiplying the two parts and then accumulating products one by one), obtain a convolution result, and output the convolution result.

Currently, the convolutional neural network (convolutional neural network, CNN) is widely used in a plurality of types of image processing applications. In the image processing application, when floating point (floating point, FP)16 data is used to perform network training on a model, network training is not converged or a convergence speed is low due to low precision of the FP16 data. Therefore, higher-precision FP32 data is required to ensure network training effect. In addition, in some applications, higher-precision FP64 data and FP128 data are required for model training.

It should be noted that, in addition to being used in the field of artificial intelligence, the floating point number calculation circuit in the present invention may be further used in the field of data signal processing, for example, an image processing system, a radar system, and a communication system. This circuit and method can optimize performance of digital signal processing (DSP) or other digital devices. For example, the circuit is used in a digital device in an existing communication system, for example, a long term evolution (long term evolution, LTE) system, a universal mobile telecommunications system (universal mobile telecommunications system, UMTS), and a global system for mobile communications (global system for mobile communications, GSM).

In an existing data calculation solution, a large bit-width multiplier is usually used to calculate data. For example, a multiplier for calculating FP64 data is usually reused to calculate the FP64 data and FP32 data. In some calculation solutions, a 54-bit multiplier is designed to directly support calculation of a mantissa (mantissa) of the FP64 data. When the multiplier is used to calculate the FP32 data, the 54-bit multiplier is logically divided into two 27-bit parts to support calculation of mantissa parts of two pairs of FP32 data. However, in terms of an area ratio, area overheads of an FP64 multiplier are approximately equal to those of four FP32 multipliers. In the conventional technology, when the FP64 multiplier is reused to calculate the FP32 data, the FP64 multiplier implements two times higher than calculation performance of the FP32 multiplier, and the FP64 multiplier also has large timing overheads and high hardware design costs. Therefore, when the large bit-width multiplier is used to calculate the data, timing overheads, a hardware design and the like are unsatisfactory.

For the foregoing problems in the existing data calculation solution, embodiments of this application provide a floating point number calculation circuit. A splitting circuit included in the floating point number calculation circuit splits a mantissa part of a first floating point number and a mantissa part of a second floating point number, and obtains a first number of shifted bits of each mantissa part obtained after splitting. An exponential processing circuit adds the first number of shifted bits of each mantissa part obtained after splitting and an exponential part corresponding to each mantissa part obtained after splitting, to obtain a plurality of second operation results, and obtains, based on the plurality of second operation results, a second number of shifted bits of each mantissa part obtained after splitting. A calculation circuit calculates a product of the mantissa part of the first floating point number and the mantissa part of the second floating point number based on each mantissa part obtained after splitting and the second number of shifted bits of each mantissa part obtained after splitting. The floating point number calculation circuit can split a large bit-width floating point number into small bit-width floating point numbers, so that a small bit-width multiplier is used to calculate the large bit-width floating point number. Therefore, calculation performance of the multiplier is appropriately used, timing overheads are small, and hardware design costs are low.

The following clearly describes the technical solutions in this application with reference to the accompanying drawings in this application. It is clear that the described embodiments are merely some rather than all of the embodiments of this application. The following several specific embodiments may be combined with each other, and same or similar content is not repeatedly described in different embodiments. It should be further noted that lengths, widths, and heights (or thicknesses) of various components shown in embodiments of this application are merely examples for description, and are not intended to limit the storage unit in this application.

Currently, there are four common formats of floating point numbers: FP 16, FP32, FP64 and FP 128. Each floating point number includes three parts: a sign bit (sign), an exponent bit (exp), and a mantissa bit (mantissa). An actual value of a floating point number is equal to sign $* 2^{exp} *$ mantissa.

FIG. 2 is a schematic diagram of composition of an FP32 floating point number according to an embodiment of this application.

As shown in FIG. 2, the FP32 floating point number has a 1-bit sign, an 8-bit exp, and a 24-bit mantissa, and a total of 32 bits stored are displayed. A most significant bit of the mantissa is implicitly stored (if exp is not 0, the hidden bit is 1, otherwise, the hidden bit is 0). There are a total of 32 bits in three parts.

When a floating point number A*B is calculated, a calculation process of an exponential part is A_exp+B_exp, and a calculation process of a mantissa part is A_mantissa*B_mantissa. Then, a newly obtained exp and mantissa are used to generate a new floating point number according to a format in a standard.

When a floating point number A+B is calculated, a larger one between A_exp and B_exp is first calculated. It is assumed that A_exp is n greater than B_exp. When mantissas are added, B_mantissa needs to be first shifted rightwards by n bits, and then B_mantissa obtained after shifting is added to A_mantissa to obtain a new mantissa. Then, a new floating point number is generated according to a standard. When a plurality of floating point numbers are added together, a maximum exp is first obtained, mantissas are correspondingly shifted based on differences between the maximum exp and exps of all floating point numbers, and then the mantissas obtained after shifting are added.

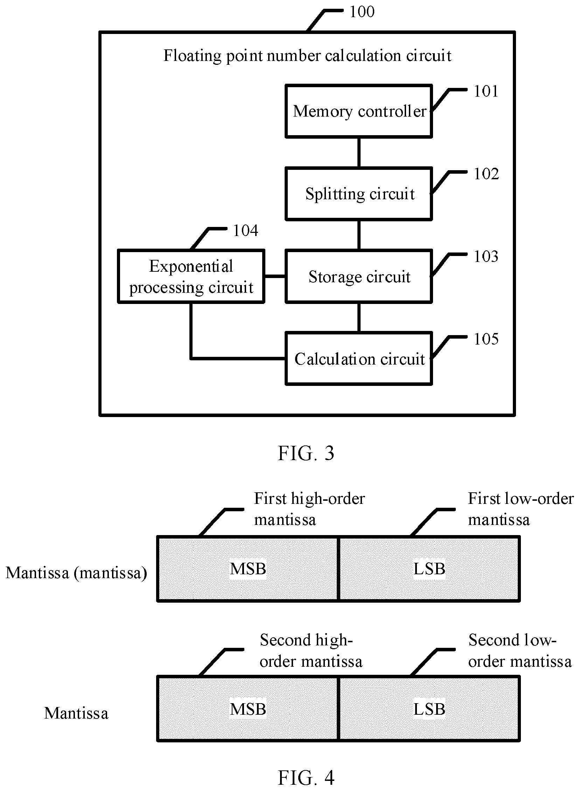

FIG. 3 is a schematic diagram of a structure of a floating point number calculation circuit according to an embodiment of this application.

Refer to FIG. 3. The floating point number calculation circuit 100 provided in this application includes a memory controller 101, a splitting circuit 102, a storage circuit 103, an exponential processing circuit 104, and a calculation circuit 105.

In this embodiment of this application, an input terminal of the splitting circuit 102 is electrically connected to an output terminal of the memory controller 101, and an output terminal of the splitting circuit 102 is electrically connected to an input terminal of the storage circuit 103. An input terminal of the exponential processing circuit 104 is electrically connected to a first output terminal of the storage circuit 103, and an output terminal of the exponential processing circuit 104 is electrically connected to a first input terminal of the calculation circuit 105. A second input terminal of the calculation circuit 105 is electrically connected to a second output terminal of the storage circuit 103.

In this embodiment of this application, a memory stores a first floating point number and a second floating point number, and the memory controller 101 is configured to obtain the first floating point number and the second floating point number. Optionally, the memory may be a double data rate (double data rate, DDR) memory, or may be another memory. This is not specifically limited herein. The memory controller may be a DDR controller, or may be a memory controller of another type. This is not specifically limited herein.

In this embodiment of this application, the splitting circuit 102 is configured to split a mantissa part of the first floating point number and a mantissa part of the second floating point number, and obtain a first number of shifted bits of each mantissa part obtained after splitting. The storage circuit is 103 configured to store each mantissa part obtained after splitting, an exponential part corresponding to each mantissa part obtained after splitting, and the first number of shifted bits of each mantissa part obtained after splitting.

For example, if the first floating point number is an FP32 floating point number, it is assumed that the mantissa part of the first floating point number is 100000000000000000000001. The splitting circuit 102 may split the mantissa part of the first floating point number into a part A whose length is 12 bits and a part B whose length is 12 bits. The part A is 100000000000, and the part B is 000000000001. If the part A is used as a reference, the part B obtained after splitting needs to be shifted rightwards by 12 bits, and then a result obtained after shifting is added to the part A to obtain the mantissa part of the first floating point number Therefore, the first number of shifted bits that is of the part B obtained after splitting and that is obtained by the splitting circuit 102 indicates to shift rightwards by 12 bits.

The foregoing splitting manner is merely used as an example for description. Optionally, the first floating point number may be an FP32 floating point number. Alternatively, the first floating point number may be an FP64 floating point number. Alternatively, the first floating point number may be an FP128 floating point number. This is not specifically limited herein. Optionally, when the mantissa part of the first floating point number is split, the mantissa part may be split into two parts, or may be split into a plurality of parts. This is not specifically limited herein. All mantissa parts obtained after splitting may have a same number of bits, or all mantissa parts obtained after splitting may have a different number of bits. This is not specifically limited herein.

In this embodiment of this application, a data type of the second floating point number is similar to a data type of the first floating point number, and a splitting manner for the mantissa part of the second floating point number is similar to a splitting manner for the mantissa part of the first floating point number Details are not described herein again.

In this embodiment of this application, the exponential processing circuit 104 is configured to add an exponential part of the first floating point number and an exponential part of the second floating point number to obtain a first operation result. The first operation result is an operation result of an exponential part obtained when the first floating point number and the second floating point number are multiplied. The exponential processing circuit 104 is further configured to: add the first number of shifted bits of each mantissa part obtained after splitting and an exponential part corresponding to each mantissa part obtained after splitting, to obtain a plurality of second operation results, and obtain, based on the plurality of second operation results, a second number of shifted bits of each mantissa part obtained after splitting. The calculation circuit 105 is configured to calculate a product of the mantissa part of the first floating point number and the mantissa part of the second floating point number based on each mantissa part obtained after splitting and the second number of shifted bits of each mantissa part obtained after splitting.

FIG. 4 is a schematic diagram of an embodiment of a floating point number calculation circuit according to an embodiment of this application.

Refer to FIG. 4. Optionally, the splitting circuit may split the mantissa part of the first floating point number into a first high-order mantissa and a first low-order mantissa, and split the mantissa part of the second floating point number into a second high-order mantissa and a second low-order mantissa. The first number of shifted bits indicates a shift difference between a most significant bit of each high-order mantissa and a most significant bit of each low-order mantissa.

In this application, two specific splitting manners for the first high-order mantissa and the first low-order mantissa are provided, and are described in detail in the following embodiment.

Manner 1: The first high-order mantissa includes a first mantissa, the first low-order mantissa includes a second mantissa, the second high-order mantissa includes a third mantissa, and the second low-order mantissa includes a fourth mantissa.

For example, if the first floating point number is an FP32 floating point number, it is assumed that the mantissa part of the first floating point number is 100000000011000000000001. The splitting circuit 102 may split the mantissa part of the first floating point number into the first mantissa whose length is 11 bits and the second mantissa whose length is 13 bits. The first mantissa is 10000000001, and the second mantissa is 1000000000001.

In this embodiment, the first mantissa belongs to the first high-order mantissa, and the second mantissa belongs to the first low-order mantissa. The first number of shifted bits indicates the shift difference between the most significant bit of each high-order mantissa and the most significant bit of each low-order mantissa. To be specific, a number of shifted bits of the first mantissa is 0, and the first number of shifted bits of the second mantissa is a shift difference of 11 bits between a first bit of the second mantissa and a first bit of the first mantissa. Therefore, the first number of shifted bits of the second mantissa indicates to shift rightwards by 11 bits.

In this embodiment, a splitting manner for the second high-order mantissa is similar to that of the first high-order mantissa, and a splitting manner for the second low-order mantissa is similar to that for the first low-order mantissa. Details are not described herein again.

Manner 2: The first high-order mantissa includes a first mantissa, the first low-order mantissa includes a second mantissa, a third mantissa, a fourth mantissa, and a fifth mantissa, the second high-order mantissa includes a sixth mantissa, and the second low-order mantissa includes a seventh mantissa, an eighth mantissa, a ninth mantissa, and a tenth mantissa.

For example, if the first floating point number is an FP64 floating point number It is assumed that the splitting circuit 102 may split the mantissa part of the first floating point number into the first mantissa 10001 whose length is 5 bits, the second mantissa 100000000001 whose length is 12 bits, the third mantissa 100000000011 whose length is 12 bits, the fourth mantissa 100000000111 whose length is 12 bits, and the fifth mantissa 100000001111 whose length is 12 bits.

In this embodiment, the first mantissa belongs to the first high-order mantissa, and the second mantissa, the third mantissa, the fourth mantissa, and the fifth mantissa belong to the first low-order mantissa. The first number of shifted bits indicates a shift difference between a most significant bit of each high-order mantissa and a most significant bit of each low-order mantissa. To be specific, the number of shifted bits of the first mantissa is 0, and the first number of shifted bits of the second mantissa is a shift difference of five bits between a first bit of the second mantissa and a first bit of the first mantissa, and is the same as a number of bits of the first mantissa. Therefore, the first number of shifted bits of the second mantissa indicates to shift rightwards by five bits. The first number of shifted bits of the third mantissa is a shift difference of 17 bits between a first bit of the third mantissa and the first bit of the first mantissa, and is the same as a sum of numbers of shifted bits of the first mantissa and the second mantissa. Therefore, the first number of shifted bits of the third mantissa indicates to shift rightwards by 17 bits. The first number of shifted bits of the fourth mantissa is a shift difference of 29 bits between a first bit of the fourth mantissa and the first bit of the first mantissa, and is the same as a sum of numbers of shifted bits of the first mantissa, the second mantissa, and the third mantissa. Therefore, the first number of shifted bits of the fourth mantissa indicates to shift rightwards by 29 bits. The first number of shifted bits of the fifth mantissa is a shift difference of 41 bits between a first bit of the fifth mantissa and the first bit of the first mantissa, and is the same as a sum of numbers of shifted bits of the first mantissa, the second mantissa, the third mantissa, and the fourth mantissa. Therefore, the first number of shifted bits of the fifth mantissa indicates to shift rightwards by 41 bits.

In this embodiment, the first high-order mantissa and the second high-order mantissa may alternatively be split in another different manner. For example, the length of the first mantissa is 9 bits, and the lengths of the second mantissa, the third mantissa, the fourth mantissa, and the fifth mantissa are all 11 bits. This is not specifically limited herein.

In this embodiment, a splitting manner for the second high-order mantissa is similar to that of the first high-order mantissa, and a splitting manner for the second low-order mantissa is similar to that for the first low-order mantissa. Details are not described herein again.

In this embodiment of this application, in addition to the splitting manners provided in Manner 1 and Manner 2, the floating point number calculation circuit may further use another splitting manner when calculating a product of floating point numbers. This is not specifically limited herein.

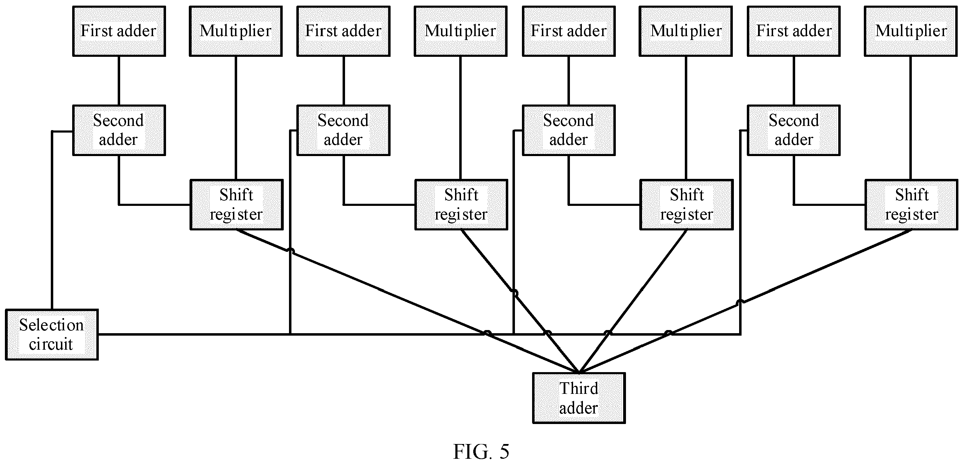

FIG. 5 is a schematic diagram of another structure of a floating point number calculation circuit according to an embodiment of this application.

Refer to FIG. 5, in this embodiment of this application, an exponential processing circuit includes a first adder, a selection circuit, and a second adder.

In this embodiment of this application, an input terminal of the first adder is electrically connected to a first output terminal of a storage circuit, and an output terminal of the first adder is electrically connected to a first input terminal of the second adder. A second input terminal of the second adder is electrically connected to an output terminal of the selection circuit, and an output terminal of the second adder is electrically connected to a first input terminal of a calculation circuit.

In this embodiment of this application, the first adder is configured to add a first number of shifted bits of each mantissa part obtained after splitting and an exponential part corresponding to each mantissa part obtained after splitting, to obtain a plurality of second operation results. The selection circuit is configured to select a largest value in the plurality of second operation results. The second adder is configured to subtract each second operation result from the largest value in the plurality of second operation results, to obtain a second number of shifted bits of each mantissa part obtained after splitting.

Optionally, the calculation circuit may include a multiplier, a shift register, and a third adder.

In this embodiment of this application, an input terminal of the multiplier is electrically connected to a second output terminal of the storage circuit, and an output terminal of the multiplier is electrically connected to a first input terminal of the shift register. A second input terminal of the shift register is electrically connected to an output terminal of the second adder. An output terminal of the shift register is electrically connected to an input terminal of the third adder.

In this embodiment of this application, the multiplier is configured to respectively multiply all mantissa parts that are obtained after splitting and that include the first high-order mantissa and the first low-order mantissa by all mantissa parts that are obtained after splitting and that include the second high-order mantissa and the second low-order mantissa, to obtain a plurality of pieces of multiplication data. The shift register is configured to perform shift processing on the plurality of pieces of multiplication data based on the second number of shifted bits of each mantissa part obtained after splitting. The third adder is configured to perform an addition operation on the plurality of pieces of multiplication data obtained after shift processing, to obtain a product of a mantissa part of a first floating point number and a mantissa part of a second floating point number

Example 1:

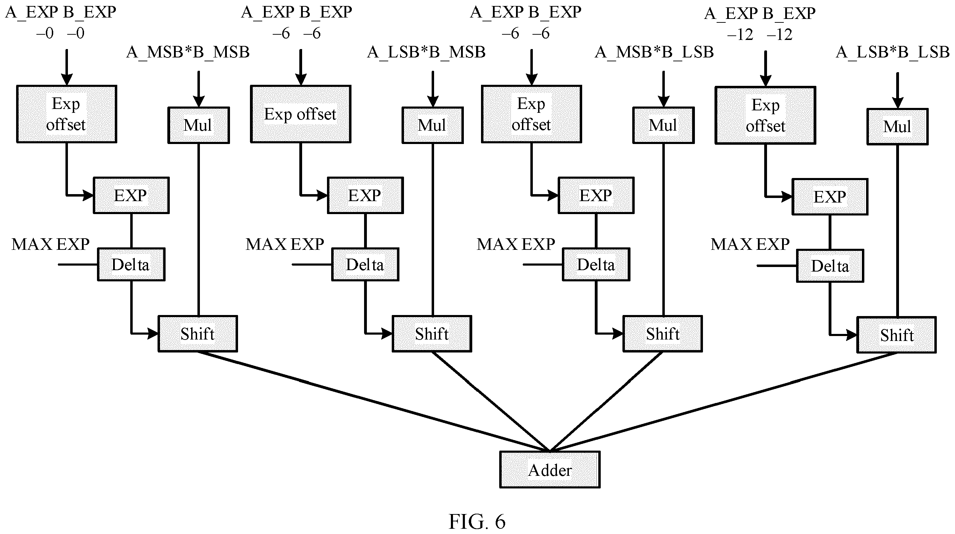

FIG. 6 is a schematic diagram of another embodiment of a floating point number calculation circuit according to an embodiment of this application.

Refer to FIG. 6. If both the first floating point number A and the second floating point number B are FP32 floating point numbers, when the FP32 floating point numbers are calculated, the mantissa part of the first floating point number is split into two parts: $A_{MSB}$ and $A_{LSB}$. The mantissa part of the second floating point number is split into two parts: $B_{MSB}$ and $B_{LSB}$. $A_{MSB}$, $A_{LSB}$, $B_{MSB}$, and $B_{LSB}$ are all 12 bits. In this case, a multiplication of the mantissa part of the first floating point number A and the mantissa part of the second floating point number B may be represented as a formula 1.

Formula 1:

$$A_{mantissa} * B_{mantissa}$$

$$= (A_{MSB} + A_{LSB} \gg 12bit) * (B_{MSB} + B_{LSB} \gg 12bit)$$

$$= A_{MSB} * B_{MSB} + A_{MSB} * B_{LSB} \gg 12bit + A_{LSB} * B_{MSB} \gg 12bit + A_{LSB} * B_{LSB} \gg 24bit$$

As shown in FIG. 6, an exponential part corresponding to $A_{MSB}$ is A_EXP, and an exponential part corresponding to $B_{MSB}$ is B_EXP. A number of shifted bits $A_{MSB}$ obtained by a splitting circuit is 0, and a number of shifted bits $B_{MSB}$ is also 0. Therefore, an EXP offset (a first adder) adds results of $A_{MSB}$-0 and $B_{MSB}$-0 to obtain A_EXP+B_EXP. A_EXP+B_EXP is the second operation result corresponding to $A_{MSB} * B_{MSB}$. The second operation result may indicate an operation result obtained after exponential parts corresponding to $A_{MSB} * B_{MSB}$ are multiplied.

The exponential part corresponding to $A_{MSB}$ is A_EXP, and an exponential part corresponding to $B_{LSB}$ is B_EXP. A number of shifted bits $A_{MSB}$ obtained by the splitting circuit is 0, and a number of shifted bits $B_{LSB}$ is -12. For ease of calculation, the number of shifted bits -12 can be split into -6 and -6, and exponential parts are respectively denoted as A_EXP-6 and B_EXP-6. The EXP offset (the first adder) adds results of $A_{MSB}$-6 and $B_{LSB}$-6 to obtain A_EXP+B_EXP-12. A_EXP+B_EXP-12 is the second operation result corresponding to $A_{MSB} * B_{LSB}$. The second operation result may indicate an operation result obtained after exponential parts corresponding to $A_{MSB} * B_{LSB}$ are multiplied.

The exponential part corresponding to $A_{LSB}$ is A_EXP, and an exponential part corresponding to $B_{MSB}$ is B_EXP. A number of shifted bits $A_{LSB}$ obtained by the splitting circuit is -12, and a number of shifted bits $B_{MSB}$ is 0. For ease of calculation, the number of shifted bits -12 can be split into -6 and -6, and exponential parts are respectively denoted as A_EXP-6 and B_EXP-6. The EXP offset (the first adder) adds results of $A_{LSB}$-6 and $B_{MSB}$-6 to obtain A_EXP+B_EXP-12. A_EXP+B_EXP-12 is the second operation result corresponding to $A_{LSB} * B_{MSB}$. The second operation result may indicate an operation result obtained after exponential parts corresponding to $A_{LSB} * B_{MSB}$ are multiplied.

The exponential part corresponding to $A_{LSB}$ is A _EXP, and an exponential part corresponding to $B_{LSB}$ is B_EXP. A number of shifted bits $A_{LSB}$ obtained by the splitting circuit is -12, and a number of shifted bits $B_{LSB}$ is -12. The EXP offset (the first adder) adds results of $A_{LSB}$-12 and $B_{LSB}$-12 to obtain A_EXP+B_EXP-24. A_EXP+B_EXP-24 is the second operation result corresponding to $A_{LSB} * B_{LSB}$. The second operation result may indicate an operation result obtained after exponential parts corresponding to $A_{LSB} * B_{LSB}$ are multiplied.

After the plurality of second operation results are obtained through calculation, the selection circuit obtains MAX EXP (the largest value in the plurality of second operation results), and then inputs MAX EXP to each delta (the second adder). Each delta subtracts each second operation result from MAX EXP, to obtain the second number of shifted bits of each mantissa part obtained after splitting.

Each 13-bit Mul unit (the multiplier) separately calculates $A_{MSB} * B_{MSB}$, $A_{MSB} * B_{LSB}$, $A_{LSB} * B_{MSB}$, and $A_{LSB} * B_{LSB}$ to obtain a plurality of pieces of multiplication data. A shift (shift register) shifts each part of input multiplication data after receiving each second number of shifted bits sent by each delta. An adder (the third adder) adds a plurality of pieces of multiplication data obtained after shifting, to obtain the product of the mantissa part of the first floating point number and the mantissa part of the second floating point number.

In this embodiment, optionally, the number of shifted bits -12 may alternatively be split in another manner, and may be split into -3 and -9, -4 and -8, or a plurality of other split manners, provided that a sum of numbers of shifted bits of two parts obtained after splitting is -12. This is not specifically limited herein. Similarly, the number of shifted bits -24 may alternatively be split in different manners. This is not specifically limited herein.

In this embodiment, optionally, the number of shifted bits -12 may alternatively be split in another manner, and may be split into -3 and -9, -4 and -8, or a plurality of other split manners, provided that a sum of numbers of shifted bits of two parts obtained after splitting is -12. This is not specifically limited herein. Similarly, the number of shifted bits -24 may alternatively be split in different manners. This is not specifically limited herein.

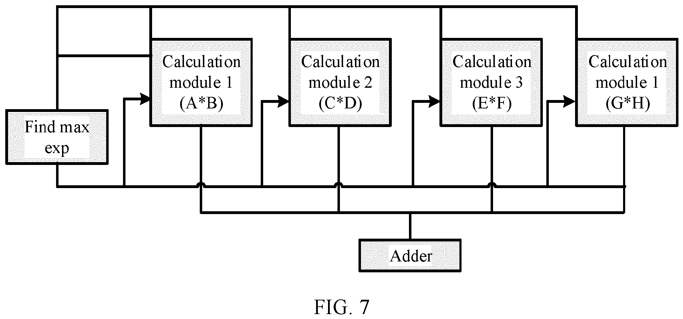

FIG. 7 is a schematic diagram of another embodiment of a floating point number calculation circuit according to an embodiment of this application.

In this embodiment of this application, refer to FIG. 7. The embodiment shown in FIG. 6 is considered as a calculation module. When a plurality of calculation modules perform a multiplication operation on a plurality of pairs of floating point numbers, the selection circuit may select a largest value (max exp) in all second operation results in the plurality of calculation modules, and return the largest value in all second operation results to each calculation module. All calculation modules obtain, based on the largest value in all the second operation results, second numbers of shifted bits of all mantissa parts obtained after splitting.

Example 2: If both the first floating point number A and the second floating point number B are FP64 floating point numbers, when the FP64 floating point numbers are calculated, the mantissa part of the first floating point number is split into five parts: a0, a1, a2, a3, a4, and a5. The mantissa part of the first floating point number is split into five parts: b0, b1, b2, b3, b4, and b5. a1, a2, a3, a4, b1, b2, b3, and b4 are all 12 bits, and a0 and b0 are 5 bits. A multiplication of the mantissa part of the first floating point number A and the mantissa part of the second floating point number B may be represented as a formula 2.

Formula 2:

$$A_{mantissa} * B_{mantissa}$$

$$= (a0 \ll 48bit + a1 \ll 36bit + a2 \ll 24bit + a3 \ll 12bit + a4) *$$

$$(b0 \ll 48bit + b1 \ll 36bit + b2 \ll 24bit + b3 \ll 12bit + b4)$$

$$= a0 * b0 \ll 96bit$$

$$+(a0 * b1 + b0 * a1) \ll 84bit$$

$$+(a0 * b2 + b0 * a2 + a1 * b1) \ll 72bit$$

$$+(a0 * b3 + b0 * a3 + a1 * b2 + b1 * a2) \ll 60bit$$

$$+(a0 * b4 + b0 * a4 + a1 * b3 + b1 * a3 + b2 * a2) \ll 48bit$$

$$+(a1 * b4 + b1 * a4 + a2 * b3 + b2 * a3) \ll 36bit$$

$$+(a2 * b4 + b2 * a4 + a3 * b3) \ll 24bit$$

$$+(a3 * b4 + b3 * a4) \ll 12bit$$

$$+a4 * b4$$

A process in which the exponential processing circuit and the calculation circuit calculate the product of the first floating point number and the mantissa part of the second floating point number is similar to that in the embodiment shown in Example 1. Details are not described herein again.

In this embodiment, because a length of the mantissa part of the FP64 floating point number is 53 bits, a total length of mantissa parts obtained after calculation of A_mantissa*B_mantissa is 106 bits. To directly calculate mantissa parts of a pair of FP64 floating point numbers in one calculation module, the adder (the third adder) needs to be extended to support calculation of 106-bit data. However, both area costs and timing costs of the extended adder are extremely high. Therefore, mantissas of the pair of FP64 floating point numbers can be split into two parts for multiplication.

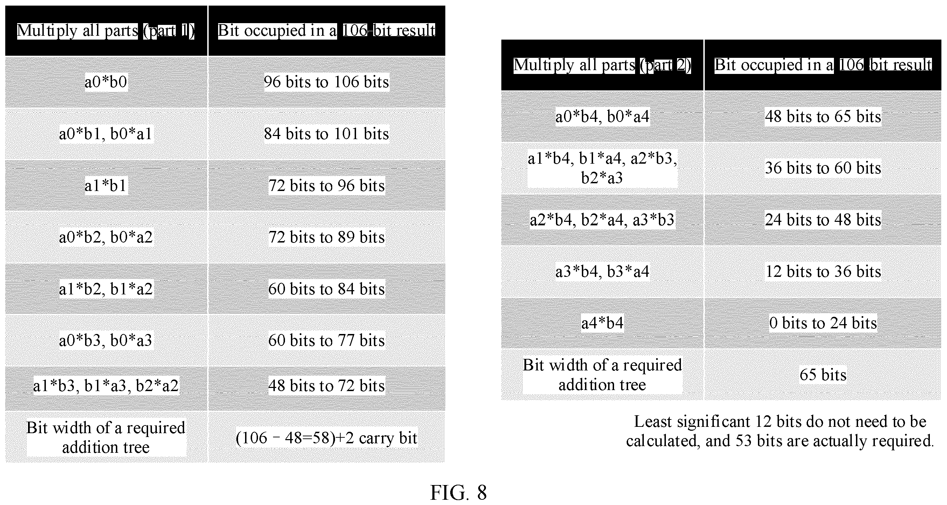

FIG. 8 is a schematic diagram of another embodiment of a floating point number calculation circuit according to an embodiment of this application.

Refer to FIG. 8. In this embodiment, optionally, the floating point number calculation circuit may combine 13 pairs of high-order parts to form a high-order part (part 1), and combine 12 pairs of low-order parts to form another part (part 2). The high-order part needs an addition tree with a total width of 60 bits, and 53 bits in the low-order part need to be calculated.

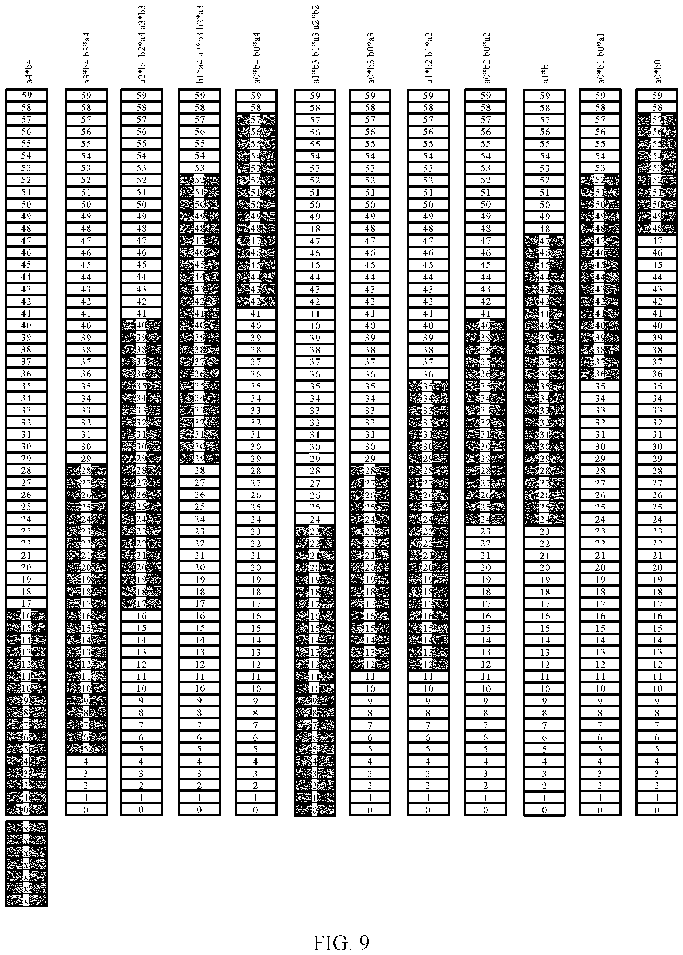

FIG. 9 is a schematic diagram of another embodiment of a floating point number calculation circuit according to an embodiment of this application.

FIG. 9 separately shows corresponding locations of calculation results that are obtained after all parts of the part 1 and the part 2 are calculated and that are in the addition tree. The 60-bit addition tree can cover calculation of the part 1. During calculation of the part 2, several least significant bits cannot be completely covered by the addition tree, but these bits do not participate in the calculation. When this part of data that cannot be covered by the addition tree is processed, this part of data may be stored, and then this part of stored data is used for subsequent calculation, or this part of data may be directly truncated. This is not specifically limited herein.

The floating point number calculation circuit provided in this embodiment of this application may be used in a convolutional neural network. A specific application process is described in detail in the following embodiment.

It is assumed that both a first floating point number A and a second floating point number B are FP32 floating point numbers, and the first floating point number A is data in a feature map.

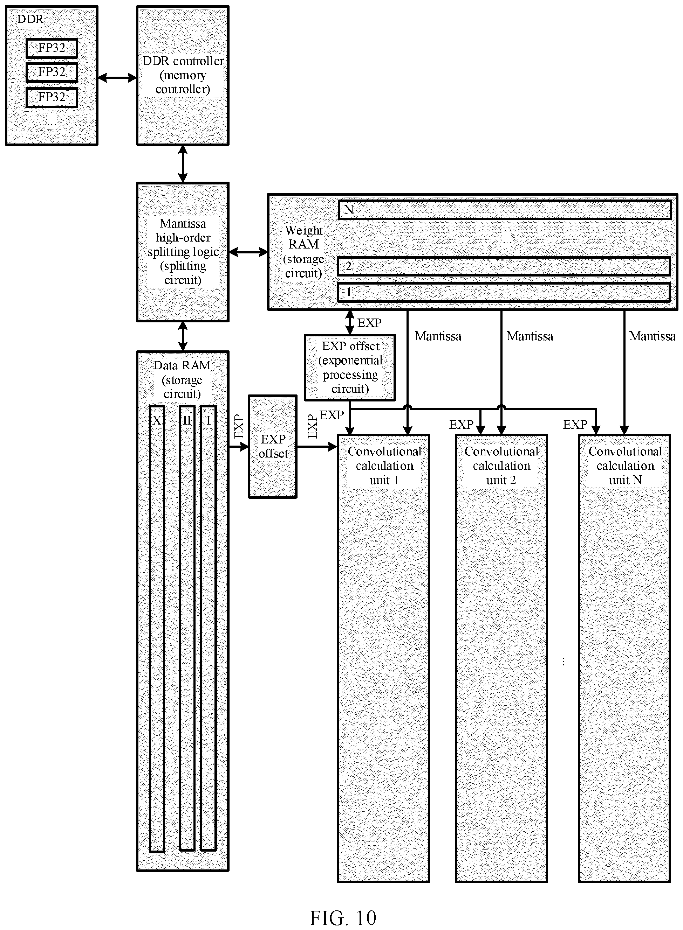

FIG. 10 is a schematic diagram of another embodiment of a floating point number calculation circuit according to an embodiment of this application.

Step 1: Refer to FIG. 10, the second floating point number B is data in a filter matrix. A DDR controller (memory controller) reads a plurality of first floating point numbers A and second floating point numbers B from a DDR (memory). A mantissa part of the first floating point number A is divided into two parts: MSB and L SB by using high-order and low-order splitting logic (splitting circuit), and the two parts are stored into a data RAM (storage circuit). Content included in I, II, ..., and X in FIG. 10 is A_MSB and A_LSB obtained after the mantissa of each first floating point number A is split, and exponential parts EXP corresponding to each A_MSB and A_LSB. A mantissa part of the second floating point number B is split into two parts: MSB and LSB, and the two parts are stored in a weight RAM (storage circuit). Content included in 1, 2, and N in FIG. 10 is B_MSB and B_LSB obtained after the mantissa of each second floating point number B is split, and exponential parts EXP corresponding to each B_MSB and B_LSB.

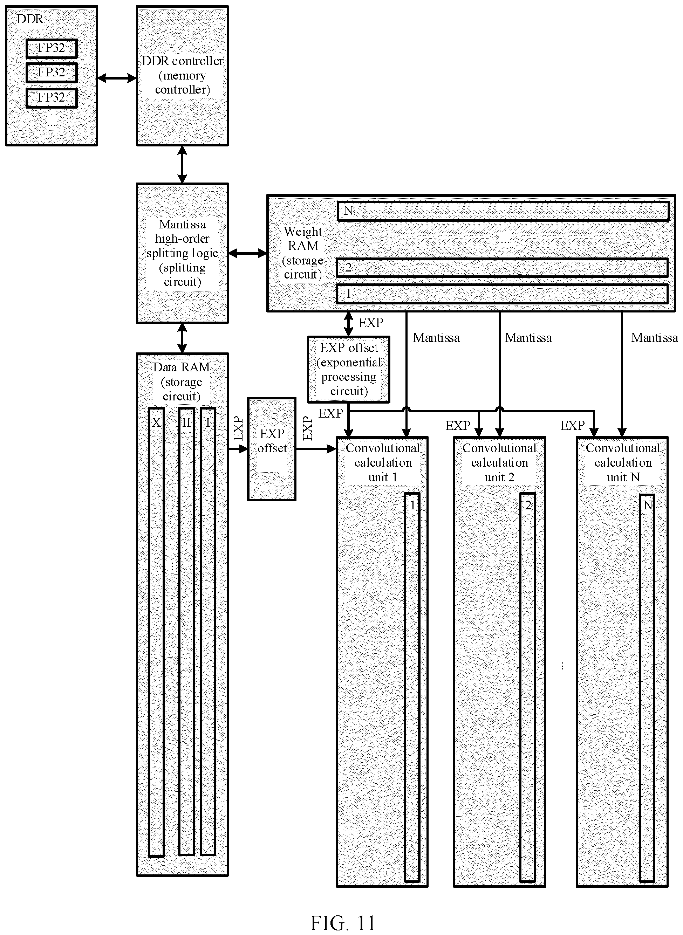

FIG. 11 is a schematic diagram of another embodiment of a floating point number calculation circuit according to an embodiment of this application.

Step 2: Refer to FIG. 11. The mantissa that is obtained after splitting and that is in the weight RAM is preloaded to a convolutional calculation unit, and EXP (an exponential part corresponding to each mantissa part obtained after splitting) is also preloaded to the convolutional calculation unit after being processed by an EXP offset (second adder).

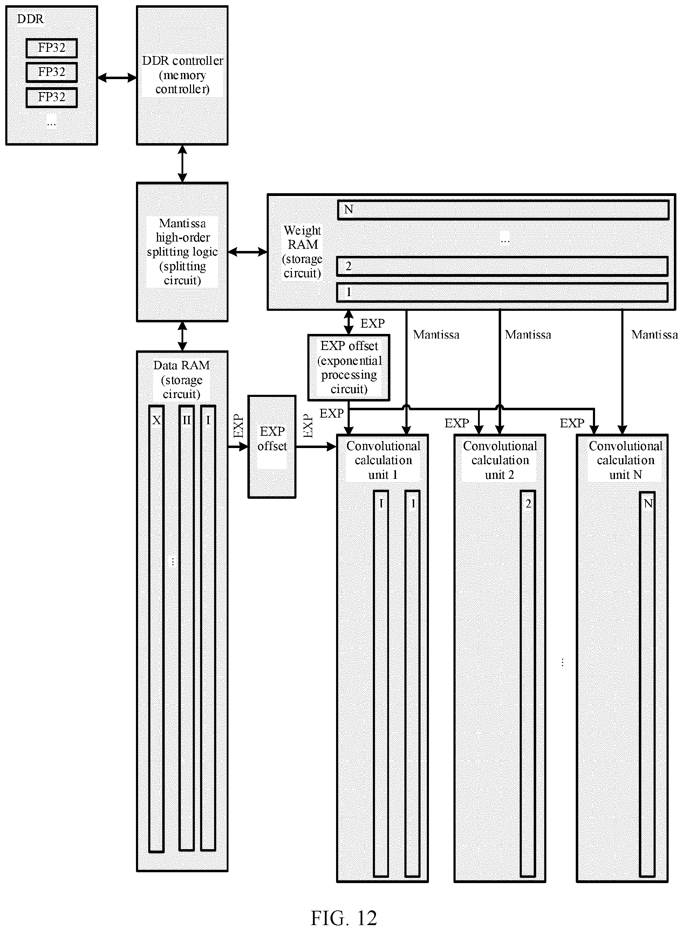

FIG. 12 is a schematic diagram of another embodiment of a floating point number calculation circuit according to an embodiment of this application.

Step 3: Refer to FIG. 12. A first segment of mantissa data (part I) is extracted from the data RAM. An EXP part is also placed in the convolutional calculation unit after being processed by the exp offset, and is calculated together with a preloaded parameter (part 1) to obtain a result.

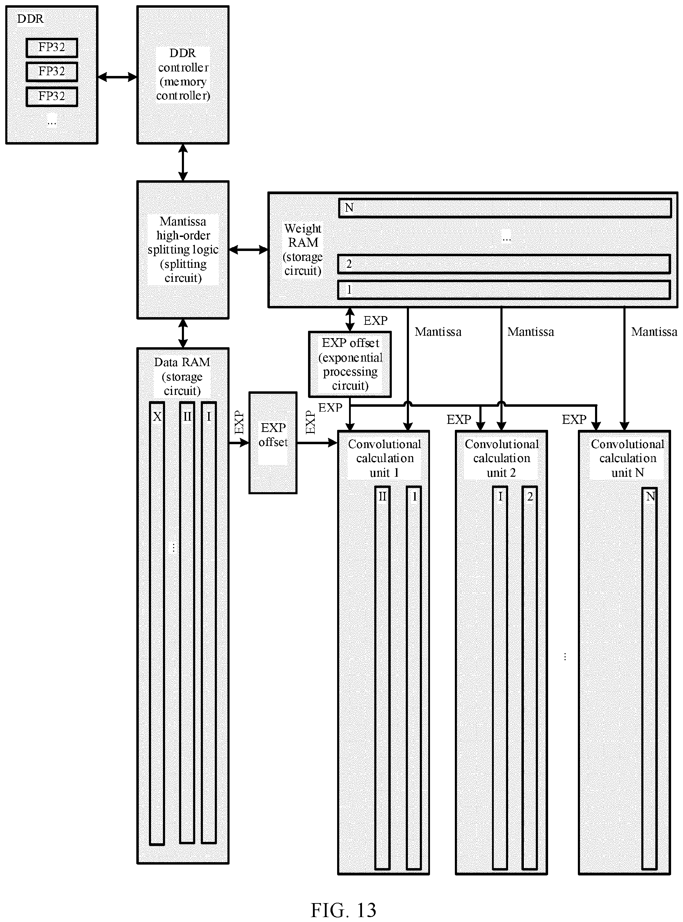

FIG. 13 is a schematic diagram of another embodiment of a floating point number calculation circuit according to an embodiment of this application.

Step 4: Refer to FIG. 13. A convolution processing unit 1 forwards the first segment of data (part I) to a calculation unit 2, and obtains a second segment of data (part II) from the data RAM. After a calculation unit 1 obtains the data of the part II, and the calculation unit 2 obtains the data of the part I, an operation is completed to generate a result. Then, at each clock, calculation units 2-N forward data processed by a previous clock to next calculation units, and the calculation unit 1 obtains new data from the data RAM each time.

Step 5: Repeat the step 4 until all data is calculated, to generate a result.

The floating point number calculation circuit and the floating point number calculation method provided in embodiments of this application are described in detail above. The principle and implementations of this application are described herein through specific examples. The foregoing embodiments are merely intended to help understand the method and core idea of this application. In addition, a person of ordinary skill in the art may make variations and modifications to this application in terms of the specific implementations and application scopes based on the ideas of this application. Therefore, the content of this specification shall not be construed as a limitation to this application.

## Claims

1. A floating point number calculation circuit, wherein the floating point number calculation circuit comprises a memory controller, a splitting circuit, a storage circuit, an exponential processing circuit, and a calculation circuit, wherein

an input terminal of the splitting circuit is electrically connected to an output terminal of the memory controller, and an output terminal of the splitting circuit is electrically connected to an input terminal of the storage circuit; an input terminal of the exponential processing circuit is electrically connected to a first output terminal of the storage circuit, and an output terminal of the exponential processing circuit is electrically connected to a first input terminal of the calculation circuit; a second input terminal of the calculation circuit is electrically connected to a second output terminal of the storage circuit; the memory controller is configured to obtain a first floating point number and a second floating point number; the splitting circuit is configured to split a mantissa part of the first floating point number and a mantissa part of the second floating point number, and obtain a first number of shifted bits of each mantissa part obtained after splitting; the storage circuit is configured to store each mantissa part obtained after splitting, an exponential part corresponding to each mantissa part obtained after splitting, and the first number of shifted bits of each mantissa part obtained after splitting; the exponential processing circuit is configured to: add an exponential part of the first floating point number and an exponential part of the second floating point number to obtain a first operation result, add the first number of shifted bits of each mantissa part obtained after splitting and the exponential part corresponding to each mantissa part obtained after splitting to obtain a plurality of second operation results, and obtain, based on the plurality of second operation results, a second number of shifted bits of each mantissa part obtained after splitting; and the calculation circuit is configured to calculate a product of the mantissa part of the first floating point number and the mantissa part of the second floating point number based on each mantissa part obtained after splitting and the second number of shifted bits of each mantissa part obtained after splitting.

2. The floating point number calculation circuit according to claim 1, wherein
the splitting circuit is configured to split the mantissa part of the first floating point number into a first high-order mantissa and a first low-order mantissa, and split the mantissa part of the second floating point number into a second high-order mantissa and a second low-order mantissa; and the first number of shifted bits indicates a shift difference between a most significant bit of each high-order mantissa and a most significant bit of each low-order mantissa.

3. The floating point number calculation circuit according to claim 2, wherein
the first high-order mantissa comprises a first mantissa, the first low-order mantissa comprises a second mantissa, the second high-order mantissa comprises a third mantissa, and the second low-order mantissa comprises a fourth mantissa.

4. The floating point number calculation circuit according to claim 2, wherein
the first high-order mantissa comprises a first mantissa, the first low-order mantissa comprises a second mantissa, a third mantissa, a fourth mantissa, and a fifth mantissa, the second high-order mantissa comprises a sixth mantissa, and the second low-order mantissa comprises a seventh mantissa, an eighth mantissa, a ninth mantissa, and a tenth mantissa.

5. The floating point number calculation circuit according to claim 3 or 4, wherein

the exponential processing circuit comprises a first adder, a selection circuit, and a second adder;
an input terminal of the first adder is electrically connected to the first output terminal of the storage circuit, and an output terminal of the first adder is electrically connected to a first input terminal of the second adder;
a second input terminal of the second adder is electrically connected to an output terminal of the selection circuit, and an output terminal of the second adder is electrically connected to the first input terminal of the calculation circuit;
the first adder is configured to add the first number of shifted bits of each mantissa part obtained after splitting and the exponential part corresponding to each mantissa part obtained after splitting, to obtain the plurality of second operation results;
the selection circuit is configured to select a largest value in the plurality of second operation results; and
the second adder is configured to subtract each second operation result from the largest value in the plurality of second operation results, to obtain the second number of shifted bits of each mantissa part obtained after splitting.

6. The floating point number calculation circuit according to claim 5, wherein

the calculation circuit comprises a multiplier, a shift register, and a third adder, wherein
an input terminal of the multiplier is electrically connected to the second output terminal of the storage circuit, and an output terminal of the multiplier is electrically connected to a first input terminal of the shift register;
a second input terminal of the shift register is electrically connected to the output terminal of the second adder;
an output terminal of the shift register is electrically connected to an input terminal of the third adder;
the multiplier is configured to respectively multiply all mantissa parts that are obtained after splitting and that comprise the first high-order mantissa and the first low-order mantissa by all mantissa parts that are obtained after splitting and that comprise the second high-order mantissa and the second low-order mantissa, to obtain a plurality of pieces of multiplication data;
the shift register is configured to perform shift processing on the plurality of pieces of multiplication data based on the second number of shifted bits of each mantissa part obtained after splitting; and
the third adder is configured to perform an addition operation on a plurality of pieces of multiplication data obtained after shift processing, to obtain the product of the mantissa part of the first floating point number and the mantissa part of the second floating point number.

7. A floating point number calculation method, comprising:

obtaining a first floating point number and a second floating point number;
splitting a mantissa part of the first floating point number and a mantissa part of the second floating point number, and obtaining a first number of shifted bits of each mantissa part obtained after splitting;
storing each mantissa part obtained after splitting, an exponential part corresponding to each mantissa part obtained after splitting, and the first number of shifted bits of each mantissa part obtained after splitting;

adding an exponential part of the first floating point number and an exponential part of the second floating point number to obtain a first operation result, adding the first number of shifted bits of each mantissa part obtained after splitting and the exponential part corresponding to each mantissa part obtained after splitting to obtain a plurality of second operation results, and obtaining, based on the plurality of second operation results, a second number of shifted bits of each mantissa part obtained after splitting; and

calculating a product of the mantissa part of the first floating point number and the mantissa part of the second floating point number based on each mantissa part obtained after splitting and the second number of shifted bits of each mantissa part obtained after splitting.

8.  The floating point number calculation method according to claim 7, wherein the splitting a mantissa part of the first floating point number and a mantissa part of the second floating point number comprises:
    splitting the mantissa part of the first floating point number into a first high-order mantissa and a first low-order mantissa, and splitting the mantissa part of the second floating point number into a second high-order mantissa and a second low-order mantissa, wherein the first number of shifted bits indicates a shift difference between a most significant bit of each high-order mantissa and a most significant bit of each low-order mantissa.

9.  The floating point number calculation method according to claim 8, wherein
    the first high-order mantissa comprises a first mantissa, the first low-order mantissa comprises a second mantissa, the second high-order mantissa comprises a third mantissa, and the second low-order mantissa comprises a fourth mantissa.

10. The floating point number calculation method according to claim 8, wherein
    the first high-order mantissa comprises a first mantissa, the first low-order mantissa comprises a second mantissa, a third mantissa, a fourth mantissa, and a fifth mantissa, the second high-order mantissa comprises a sixth mantissa, and the second low-order mantissa comprises a seventh mantissa, an eighth mantissa, a ninth mantissa, and a tenth mantissa.

11. A calculation apparatus, wherein the calculation apparatus comprises a control circuit and a floating point number calculation circuit, wherein
    the floating point number calculation circuit calculates data under control of the control circuit, and the floating point number calculation circuit is the floating point number calculation circuit according to any one of claims 1 to 6.

FIG. 1

FIG. 2

100

Floating point number calculation circuit

Memory controller — 101

Splitting circuit — 102

104

Exponential processing circuit | Storage circuit — 103

Calculation circuit — 105

FIG. 3

First high-order mantissa

First low-order mantissa

Mantissa (mantissa)

MSB | LSB

Second high-order mantissa

Second low-order mantissa

Mantissa

MSB | LSB

FIG. 4

FIG. 5

FIG. 6

EP 4 220 379 A1

FIG. 7

| Multiply all parts (part 1) | Bit occupied in a 106-bit result |
|---|---|
| a0*b0 | 96 bits to 106 bits |
| a0*b1, b0*a1 | 84 bits to 101 bits |
| a1*b1 | 72 bits to 96 bits |
| a0*b2, b0*a2 | 72 bits to 89 bits |
| a1*b2, b1*a2 | 60 bits to 84 bits |
| a0*b3, b0*a3 | 60 bits to 77 bits |
| a1*b3, b1*a3, b2*a2 | 48 bits to 72 bits |
| Bit width of a required addition tree | (106 − 48=58)+2 carry bit |

| Multiply all parts (part 2) | Bit occupied in a 106 bit result |
|---|---|
| a0*b4, b0*a4 | 48 bits to 65 bits |
| a1*b4, b1*a4, a2*b3, b2*a3 | 36 bits to 60 bits |
| a2*b4, b2*a4, a3*b3 | 24 bits to 48 bits |
| a3*b4, b3*a4 | 12 bits to 36 bits |
| a4*b4 | 0 bits to 24 bits |
| Bit width of a required addition tree | 65 bits |

Least significant 12 bits do not need to be calculated, and 53 bits are actually required.

FIG. 8

EP 4 220 379 A1

FIG. 9

FIG. 10

FIG. 11

FIG. 12

FIG. 13

## INTERNATIONAL SEARCH REPORT

| International application No. |
|---|
| **PCT/CN2020/125676** |

| A. | CLASSIFICATION OF SUBJECT MATTER |
|---|---|

G06F 7/485(2006.01)i

According to International Patent Classification (IPC) or to both national classification and IPC

| B. | FIELDS SEARCHED |
|---|---|

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 浮点数, 乘法, 相乘, 拆分, 尾数, 移位, 指数, floating point, multiply, split, mantissa, shift, eaponential

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 109901814 A (SHANGHAI JIAO TONG UNIVERSITY) 18 June 2019 (2019-06-18) description, paragraphs [0041]-[0068] | 1-11 |
| A | CN 109508173 A (INTEL CORPORATION) 22 March 2019 (2019-03-22) entire document | 1-11 |
| A | CN 110221808 A (SHENZHEN XINYING TECHNOLOGY CO., LTD.) 10 September 2019 (2019-09-10) entire document | 1-11 |
| A | CN 107305485 A (CAMBRICON TECHNOLOGIES CO., LTD.) 31 October 2017 (2017-10-31) entire document | 1-11 |
| A | US 2016248439 A1 (RENESAS ELECTRONICS CORPORATION) 25 August 2016 (2016-08-25) entire document | 1-11 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **07 July 2021** | **26 July 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<div style="text-align:center">

**INTERNATIONAL SEARCH REPORT**
**Information on patent family members**

</div>

International application No.

**PCT/CN2020/125676**

| Patent document cited in search report | | | Publication date (day/month/year) | Patent family member(s) | | | Publication date (day/month/year) |
|---|---|---|---|---|---|---|---|
| CN | 109901814 | A | 18 June 2019 | None | | | |
| CN | 109508173 | A | 22 March 2019 | US | 2019079728 | A1 | 14 March 2019 |
| | | | | EP | 3457571 | A2 | 20 March 2019 |
| CN | 110221808 | A | 10 September 2019 | None | | | |
| CN | 107305485 | A | 31 October 2017 | None | | | |
| US | 2016248439 | A1 | 25 August 2016 | JP | 2016157299 | A | 01 September 2016 |

Form PCT/ISA/210 (patent family annex) (January 2015)